# EUROPÄISCHE PATENTANMELDUNG

(11) **EP 3 095 980 A1**
(43) Veröffentlichungstag der Anmeldung: **23.11.2016**
(21) Anmeldenummer: 16167934.5
(22) Anmeldetag: 02.05.2016
(51) Int. Cl.: F01N 3/20, F01N 13/00

(54) **KATALYSATOR ZUR ABGASNACHBEHANDLUNG UND ABGASNACHBEHANDLUNGSVORRICHTUNG**

(30) Priorität: 20.05.2015 DE 102015209163
(71) Anmelder: Volkswagen Aktiengesellschaft, 38440 Wolfsburg (DE)
(72) Erfinder: Jarzombek, Peter, 38239 Salzgitter (DE); Car, Onur Ulas, 10115 Berlin (DE); Piritz, Frank, 38112 Braunschweig (DE)

(57) **Zusammenfassung**

Die Erfindung betrifft einen Katalysator (12) zur Abgasnachbehandlung. Erfindungsgemäß ist eine Einspritzdüse (20) einer Einspritzvorrichtung (14) zum Einspritzen von einem Reduktionsmittel in einen Wabenkörper (28) des Katalysators (12) mündend vorgesehen. Der Katalysator (12) kann in einer Abgasnachbehandlungsvorrichtung, insbesondere in einem Kraftfahrzeug, zum Einsatz gelangen.

## Beschreibung

Die Erfindung betrifft einen Katalysator zur Abgasnachbehandlung gemäß dem Oberbegriff des Patentanspruchs 1. Des Weiteren betrifft die Erfindung eine Abgasnachbehandlungsvorrichtung mit einem derartigen Katalysator.

Katalysatoren, auch Fahrzeugkatalysatoren, dienen der Abgasnachbehandlung einer Brennkraftmaschine, insbesondere in einem Kraftfahrzeug. Durch Katalysatoren können die Schadstoffemissionen im Abgas der Brennkraftmaschine drastisch reduziert werden.

Durch die aktuelle und zukünftige Abgasgesetzgebung wird es zunehmend schwieriger, die vorgegebenen Grenzwerte für Stickoxide (NOx) im Abgas einzuhalten. Aktuelle Abgasnachbehandlungsvorrichtungen mit SCR-Katalysatoren bzw. Filtern mit SCR-Beschichtung (SCRF) oder NOx-Speicherkatalysatoren erfüllen diese Anforderungen, stoßen aber zunehmend an ihre funktionellen Grenzen. Weiterhin verlangen die Anforderungen nach sinkenden CO₂-Emissionen eine Reduzierung des Abgasgegendrucks.

SCR-Katalysatoren dienen zur Reduktion von Stickoxiden (NOx) im Abgasstrom durch selektive katalytische Reduktion. Hierbei wird beispielsweise eine wässrige Harnstofflösung in den Abgasstrom eingespritzt, wobei durch Hydrolyse Kohlendioxid (CO₂) und Ammoniak (NH₃) entstehen. Das so entstandene Ammoniak (NH₃) reduziert Stickoxide (NOx) im Abgas zu Stickstoff (N₂).

Aus der DE 10 2008 001 161 A1 ist eine Abgasnachbehandlungsvorrichtung bekannt, bei der ein Reduktionsmittel aus einem Behälter über eine Leitung in einen Abgasstrom eingespeist wird. Die Einspeisestelle befindet sich in Strömungsrichtung des Abgasstromes vor einem Katalysator der Abgasnachbehandlungsvorrichtung.

Zur Gewährleistung einer ausreichenden Gleichverteilung bei der Eindosierung der Harnstofflösung werden entweder lange Mischstrecken mit einfachen Mischelementen verwendet, oder es werden bei Bauraumknappheit entsprechend verkürzte Mischstrecken durch aufwändige Mischelemente kompensiert. Jedoch führen derartige aufwändige Mischsysteme zu einem höheren Gegendruck, oder eine ausreichende Gleichverteilung wird bei kurzen Mischstrecken nicht erreicht. Lange Mischstrecken hingegen führen zu einer Reduzierung der Temperatur von stromabwärts liegenden Komponenten einer Abgasnachbehandlungsvorrichtung. Da die Konvertierungsleistung von Katalysatoren maßgeblich von der Temperatur abhängt, führt eine geringere Temperatur aufgrund einer längeren Mischstrecke zu einer Verschlechterung der Konvertierungsleistung.

Trotzdem werden, sofern Bauraum zur Verfügung steht und keine temperaturkritischen Verhältnisse vorhanden sind, lange Mischstrecken mit einfachen Mischelementen gewählt. Um einem zu starken Absinken der Temperatur bei langen Mischstrecken entgegenzuwirken, werden häufig aufwändige Konstruktionen mit z.B. einer Außenisolierung, doppelwandigen Trichtern oder luftspaltisolierten Komponenten verwendet. Diese Maßnahmen erhöhen allerdings den Fertigungsaufwand.

Um hingegen auf lange Mischstrecken verzichten zu können, z.B. bei Bauraumknappheit, werden zum Erreichen einer ausreichenden Gleichverteilung die erwähnten Mischelemente verwendet. Diese erhöhen allerdings den Gegendruck, was negative Effekte auf die Verbrennung und die CO₂-Emissionen hat.

Der Erfindung liegt die Aufgabe zugrunde, bei geringem Bauraumangebot mit geringem bauteiltechnischem Aufwand eine ausreichende Gleichverteilung bereitzustellen.

Diese Aufgabe wird erfindungsgemäß durch einen Katalysator, insbesondere der oben genannten Art, mit den in Anspruch 1 angegebenen Merkmalen gelöst. Der erfidnungsgemäße Katalysator kann insbesondere in einem Kraftfahrzeug angeordnet sein. Vorteilhafte Ausgestaltungen der Erfindung sind in den weiteren Ansprüchen und der Beschreibung dargelegt.

Dazu ist bei einem Katalysator erfindungsgemäß vorgesehen, dass eine Einspritzdüse einer Einspritzvorrichtung zum Einspritzen von einem Reduktionsmittel in einen Wabenkörper des Katalysators mündend vorgesehen ist.

Dies hat den Vorteil, dass der Katalysator neben seiner eigentlichen Funktion der Abgasnachbehandlung auch eine Mischwirkung durch den Wabenkörper des Katalysators bereitstellt. Somit weist der Katalysator, konkret der Wabenkörper des Katalysators, eine Doppelfunktion auf. Dies erlaubt es, auf Mischelemente zu verzichten und/oder eine Mischstrecke zu verkürzen und damit die Mischstrecke einem begrenzten Bauraumangebot anzupassen.

Gemäß einer Ausführungsform weist der Wabenkörper in Einbaulage in Strömungsrichtung des Abgasstromes einen ersten Abschnitt und einen sich in Strömungsrichtung des Abgasstromes an den ersten Abschnitt anschließenden zweiten Abschnitt auf, wobei die Einspritzdüse der Einspritzvorrichtung in den zweiten Abschnitt mündend angeordnet ist. Dabei weisen der erste Abschnitt und der zweiten Abschnitt in Strömungsrichtung des Abgasstromes Abmessungen von größer Null auf. Somit weist der Wabenkörper des Katalysators aufgrund der beiden Abschnitte eine Doppelfunktion auf, nämlich in dem ersten Abschnitt eine Abgasnachbehandlung durchzuführen und in dem zweiten Abschnitt eine Mischwirkung bereitzustellen.

Gemäß einer weiteren Ausführungsform ist der Katalysator als Dieseloxidationskatalysator (DOC) ausgebildet. Dieseloxidationskatalysatoren (DOC von englisch diesel oxidation catalytic converter) entfernen Kohlenmonoxid (CO) und Kohlenwasserstoffe (CnHm) aus dem Abgas von Dieselmotoren durch Oxidation mit Sauerstoff. Aufgrund der deutlich niedrigeren Abgastemperaturen im Vergleich zum Ottomotor sind Diesel-Oxidationskatalysatoren oft nahe am Abgaskrümmer verbaut. Der Washcoat des Wabenkörpers enthält z.B. nur Platin und/oder Palladium.

Gemäß einer weiteren Ausführungsform ist der Katalysator als NOx-Speicherkatalysator ausgebildet. Eine NOx-Minimierung von z.B. Dieselmotoren kann zunächst durch innermotorische Maßnahmen, also die gezielte Beeinflussung der Verbrennung, zum Beispiel durch teilweise Abgasrückführung, erfolgen. Dies ist jedoch nur in engen Grenzen möglich, da ansonsten die Ruß-Emissionen zunehmen und die Motorleistung sinkt. Mit NOx-Speicherkatalysatoren kann der NOx-Ausstoß ohne Rußemissionen gesenkt werden. Ein NOx-Speicherkatalysator lagert Stickoxide (NOx) kontinuierlich auf einer Speicheroberfläche an, die z.B. überwiegend aus einer Bariumverbindung besteht. Hat der NOx-Speicherkatalysator seinen Endbeladungszustand erreicht, wird er regeneriert. Dabei werden die eingelagerten Stickoxide (NOx) aus der Speicheroberfläche entfernt und in die Komponenten Stickstoff (N₂) und Kohlendioxid (CO₂) konvertiert. Die Ausspeicherung der Stickoxide (NOx) und die Konvertierung laufen getrennt ab.

Gemäß einer weiteren Ausführungsform weist der zweite Abschnitt eine Hydrolyse-Beschichtung auf. Bei der Hydrolyse-Beschichtung kann es sich um eine Titandioxid enthaltende Beschichtung handeln. Mit einer derartigen Hydrolyse-Beschichtung kann z.B. die eingespritzte Harnstofflösung zu Ammoniak (NH₃) umgewandelt werden. Mit dem Ammoniak (NH₃) können in einem in Strömungsrichtung der Abgasströmung nachfolgend angeordneten SCR-Katalysator Stickoxide (NOx) in Stickstoff (N₂) und Wasserdampf zerlegt werden.

Gemäß einer weiteren Ausführungsform weist der zweite Abschnitt eine SCR-Beschichtung auf. Die SCR-Beschichtung kann Vanadium und/oder Wolfram und/oder Titanoxid enthalten. So kann der Anteil von Stickoxiden (NOx) reduziert werden.

Gemäß einer weiteren Ausführungsform ist der zweite Abschnitt unbeschichtet. Somit weist der zweite Abschnitt einen besonders geringen Strömungswiderstand auf und erhöht so den Gegendruck nicht oder allenfalls geringfügig.

Ferner gehört zur Erfindung eine Abgasnachbehandlungsvorrichtung zur Abgasnachbehandlung. Bevorzugt handelt es sich um eine Abgasnachbehandlungsvorrichtung in einem Kraftfahrzeug mit zumindest einem erfindungsgemäßen Katalysator. Im Zusammenhang der Erfindung steht des Weiterenein Kraftfahrzeug, insbesondere ein PKW oder ein Nutzfahrzeug, mit einer derartigen Abgasnachbehandlungsvorrichtung.

Dabei kann in Strömungsrichtung des Abgasstromes hinter dem zweiten Abschnitt ein SCR-Katalysator und/oder ein Sperrkatalysator und/oder ein Dieselrußpartikelfilter (cDPF) und/oder ein SCRF-Katalysator angeordnet sein.

SCR-Katalysatoren (Selective Catalytic Reduction) wandeln die Abgaskomponente Stickoxid (NOx) ohne Bildung von unerwünschten Nebenprodukten selektiv zu Stickstoff (N₂) und Wasser (H₂O) um. Die Umwandlung erfolgt dabei unter Verwendung einer synthetisch hergestellten, wässrigen Harnstofflösung, z. B. AdBlue® (ISO 22241-1 / AUS 32), die z.B. in einem Zusatztank mitgeführt werden kann.

Der Sperrkatalysator kann ein Oxidationskatalysator sein, der in Strömungsrichtung der Abgasströmung hinter z.B. einem SCR-Katalysator angeordnet ist. Der Sperrkatalysator dient dazu zu verhindern, dass aus einer Überdosierung von Harnstoff gebildetes Ammoniak (NH₃) nicht mit Stickoxid (NOx) reagiert und in die Umgebung gelangt, da dies zu einer Geruchsbelästigung in der Nähe des Fahrzeugs führen kann (sogenannter Ammoniak-Schlupf). Der Sperrkatalysator wandelt im Falle einer Ammoniak-Überdosierung das Ammoniak (NH₃) wieder in Stickstoff (N₂) und Wasser um.

Ein Dieselrußpartikelfilter ist eine Einrichtung zur Reduzierung der im Abgas von Dieselmotoren vorhandenen Partikel. Ein katalytisch beschichteter Filter arbeitet ohne Additiv und verwendet dafür eine edelmetallhaltige Filterbeschichtung, die auf zweifache Weise wirkt. Bei der passiven Regeneration erfolgt eine langsame und schonende Umwandlung des im Katalysator eingelagerten Rußes zu Kohlendioxid (CO₂). Dieser Vorgang geschieht in einem Temperaturbereich von 350 - 500 °C und läuft vor allem im überwiegenden Autobahnbetrieb ohne besondere Maßnahmen kontinuierlich ab. Nur bei längerem Betrieb mit geringer Last, etwa im Stadtverkehr, sorgt alle 1.000 bis 1.200 Kilometer eine aktive Erhöhung der Abgastemperatur auf rund 600 °C für eine zusätzliche Filter-Regeneration. Die im Filter eingelagerten Partikel brennen bei dieser Temperatur ab.

Ein SCRF Katalysator weist eine SCR Beschichtung auf einem Dieselpartikelfilter (DPF) auf. SCRF Katalysatoren haben den Vorteil, dass sie in motornaher Position verbaut werden können. Dabei wird im Rahmen der vorliegenden Erfindung mit dem Begriff "motornah" ein Abstand zwischen Zylinderauslass der Brennkraftmaschine und Stirnfläche der Abgasbehandlungseinrichtung von höchstens 120 cm, insbesondere höchstens 100 cm, vorzugsweise höchstens 80 cm verstanden. In einer konkreten Ausführung beträgt der Abstand etwa 75 cm. Eine motornahe Anordnung bedeutet insbesondere, dass die Abgasbehandlungseinrichtung im Motorraum und/oder aufgenommen an der Brennkraftmaschine ("closed-coupled") angeordnet ist. Auf diese Weise kann die Abwärme der Brennkraftmaschine genutzt werden, um die Arbeitstemperaturen der Katalysatoren in der Abgasbehandlungseinrichtung zu erreichen. Des Weiteren wird ein kompakter Aufbau realisiert.

Die Erfindung wird im Folgenden anhand der Zeichnung näher erläutert. Diese zeigt in
- Fig. 1: in schematischer Darstellung ein Ausführungsbeispiel eines erfindungsgemäßen Katalysators,
- Fig. 2: in schematischer Darstellung ein Ausführungsbeispiel einer Abgasnachbehandlungsvorrichtung,
- Fig.3: in schematischer Darstellung ein weiteres Ausführungsbeispiel einer Abgasnachbehandlungsvorrichtung, und
- Fig. 4: in schematischer Darstellung ein weiteres Ausführungsbeispiel einer Abgasnachbehandlungsvorrichtung.

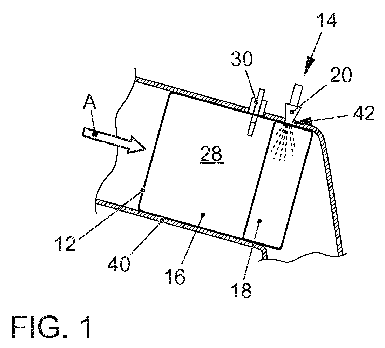

Es wird zunächst auf die Fig. 1 Bezug genommen.

Dargestellt ist ein Katalysator 12 einer Abgasnachbehandlungsvorrichtung 10 zur Abgasbehandlung eines Antriebs eines Kraftfahrzeugs, wie z.B. eines PKWs. Das Kraftfahrzeug weist als Antrieb eine als Dieselmotor ausgebildete Brennkraftmaschine (nicht in Fig. 1 dargestellt) auf. Alternativ kann die Brennkraftmaschine auch ein Ottomotor sein.

Der Katalysator 12 weist ein Gehäuse 40 und einen in dem Gehäuse 40 aufgenommenen Wabenkörper 28 auf. Das Gehäuse 40 weist eine Einsetzöffnung 42 für eine Einspritzdüse 20 einer Einspritzvorrichtung 14 zum Einspritzen von einem Reduktionsmittel, wie z.B. einer wässrigen Harnstofflösung, auf.

Der Wabenkörper 28 kann z.B. aus Keramik, wie z.B. Cordierit, oder Metallfolien bestehen, und weist eine Vielzahl dünnwandiger Kanäle auf. Auf dem als Träger dienenden Wabenkörper 28 befindet sich der so genannte Washcoat, der je nach Verwendungszweck des Katalysators 12 verschiedene Materialien enthalten kann, wie später erläutert wird.

Der Katalysator wird in der in Fig. 1 dargestellten Einbaulage von einem Abgasstrom in Strömungsrichtung A durchströmt. Somit strömt durch den Wabenkörper 28 Abgas in Strömungsrichtung A.

Der Wabenkörper 28 weist einen ersten Abschnitt 16 und einen zweiten Abschnitt 18 auf. Dabei ist der zweite Abschnitt 18 in Strömungsrichtung A des Abgasstromes hinter dem ersten Abschnitt 16 angeordnet. Mit anderen Worten durchströmt Abgas zuerst den ersten Abschnitt 16 des Katalysators 12 und dann den zweiten Abschnitt 18.

Im ersten Abschnitt 16 ist ein Sensor 30 angeordnet. Mit dem Sensor 30 kann z.B. ein Temperaturwert im Katalysator 12 erfasst und einer Motorsteuerung (nicht dargestellt) des Antriebs des Kraftfahrzeugs als Eingangsgröße zugeführt werden.

Im vorliegenden Ausführungsbeispiel ist der erste Abschnitt 16 als Dieseloxidationskatalysator oder als NOx-Speicherkatalysator ausgebildet.

Mit einem als Dieseloxidationskatalysator ausgebildeten ersten Abschnitt 16 des Katalysators 12 können Kohlenmonoxid (CO) und Kohlenwasserstoffe (CnHm) aus dem Abgasstrom von einer als Dieselmotor ausgebildeten Brennkraftmaschine durch Oxidation mit Restsauerstoff entfernt werden. Der Washcoat des Wabenkörpers 28 im ersten Abschnitt 16 enthält im vorliegenden Ausführungsbeispiel Platin und/oder Palladium.

Mit einem als NOx-Speicherkatalysator ausgebildeten ersten Abschnitt 16 hingegen können Stickoxide (NOx) aus dem Abgasstrom entfernt werden. Dabei lagern sich Stickoxide (NOx) kontinuierlich auf einer Speicheroberfläche des NOx-Speicherkatalysators an, die überwiegend aus einer Bariumverbindung besteht. Hat die Speicheroberfläche des NOx-Speicherkatalysators ihren Endbeladungszustand erreicht, wird sie regeneriert. Dabei werden die eingelagerten Stickoxide (NOx) aus der Speicheroberfläche entfernt und in die Komponenten Stickstoff (N₂) und Kohlendioxid (CO₂) konvertiert.

Im zweiten Abschnitt 18 ist die Einspritzdüse 20 der Einspritzvorrichtung 14 zum Einspritzen von dem Reduktionsmittel angeordnet. Hierzu kann die Einspritzvorrichtung 14 einen Vorratstank (nicht dargestellt) für die wässrige Harnstofflösung (nicht dargestellt), eine Pumpe (nicht dargestellt) zum Fördern der wässrigen Harnstofflösung sowie Verbindungsleitungen (nicht dargestellt) aufweisen.

Mit der Einspritzdüse 20 eingespritztes Reduktionsmittel wird durch den Wabenkörper 28 im zweiten Abschnitt 18 verwirbelt und so gleichmäßig verteilt. So kann auf Mischelemente verzichtet werden. Alternativ oder zusätzlich kann eine Mischstrecke bei begrenztem Bauraumangebot verkürzt werden.

Damit weist der Katalysator 4 eine Doppelfunktion auf, nämlich zum einen Kohlenmonoxid (CO) und Kohlenwasserstoffe (CnHm) oder Stickoxide (NOx) aus dem Abgasstrom zu entfernen, und zum anderen wird eine gleichmäßige Verteilung des Reduktionsmittels bewirkt.

Der Wabenkörper 28 des zweiten Abschnitts 18 kann frei von einer Beschichtung ausgebildet sein, also unbeschichtet sein. Dann weist der zweite Abschnitt 18 einen besonders geringen Strömungswiderstand auf und erhöht so der Gegendruck nicht oder allenfalls geringfügig.

Alternativ kann der Wabenkörper 28 des zweiten Abschnitts 18 eine Hydrolyse-Beschichtung aufweisen, die z.B. Titandioxid enthält. Mit einer derartigen Hydrolyse-Beschichtung kann z.B. die mit der Einspritzdüse 20 eingespritzte wässrige Harnstofflösung zu Ammoniak (NH₃) umgewandelt werden.

Ferner kann der Wabenkörper 28 des zweiten Abschnitts 18 eine SCR-Beschichtung aufweisen, die z.B. Vanadium und/oder Wolfram und/oder Titanoxid enthält, um den Anteil von Stickoxiden im Abgasstrom zu reduzieren.

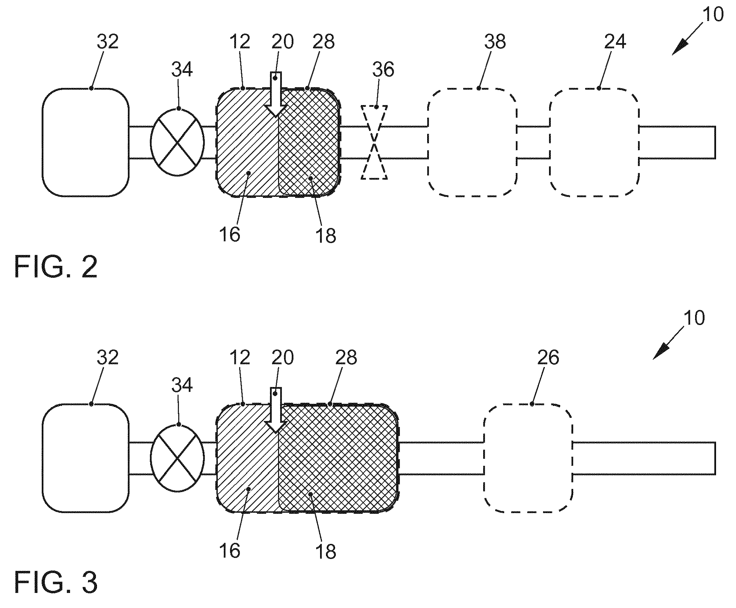

Es wird nun auf Fig. 2 Bezug genommen.

Die Fig. 2 zeigt ein Ausführungsbeispiel einer Abgasnachbehandlungsvorrichtung 10 zur Nachbehandlung von Abgasen einer Brennkraftmaschine 32, bei der es sich im vorliegenden Ausführungsbeispiel um einen Dieselmotor handelt.

In diesem Ausführungsbeispiel sind in Strömungsrichtung A der Abgase der Brennkraftmaschine 32 ein weiteres Bauteil, wie z.B. eine Lambdasonde oder, wie im vorliegenden Ausführungsbeispiel, ein Abgasturbolader 34, der Katalysator 12, eine Mischvorrichtung 36, ein SCRF-Katalysator 38 und ein Sperrkatalysator 24 angeordnet.

Abweichend von dem in Fig. 2 dargestellten Ausführungsbeispiel können in Strömungsrichtung A der Abgase der Brennkraftmaschine 32 der Abgasturbolader 34, der Katalysator 4 und der SCRF-Katalysator 38 angeordnet sein. Mit anderen Worten handelt es sich bei der Mischvorrichtung 36 und dem Sperrkatalysator 24 um jeweils optionale Komponenten der Abgasnachbehandlungsvorrichtung 10 gemäß diesem Ausführungsbeispiel.

Der SCRF-Katalysator 38 weist eine SCR Beschichtung auf einem Dieselpartikelfilter (DPF) auf. SCRF-Katalysatoren 38 haben den Vorteil, dass sie in motornaher Position verbaut werden können.

Im Betrieb strömt Abgas in Strömungsrichtung A von der Brennkraftmaschine 32 durch den Abgasturbolader 34 zum Katalysator 12. Im ersten Abschnitt 16 des Katalysators 12 werden Kohlenmonoxid (CO) und Kohlenwasserstoffe (CnHm) oder Stickoxide (NOx) aus dem Abgasstrom entfernt. Im zweiten Abschnitt 18 wird mittels der Einspritzdüse 20 wässrige Harnstofflösung in den zweiten Abschnitt 18 des Wabenkörpers 28 eingespritzt. Durch den Wabenkörper 28 wird die wässrige Harnstofflösung gleichmäßig verteilt.

Nach Austritt aus dem Katalysator 4 passiert der mit wässriger Harnstofflösung versetzte Abgasstrom die Mischvorrichtung 36, die eine weitere Durchmischung und damit Vergleichmäßigung bewirkt.

Der mit wässriger Harnstofflösung vermischte Abgasstrom tritt nun in den SCRF-Katalysator 38 ein. Der SCRF-Katalysator 38 entfernt Rußpartikel aus dem Abgasstrom und zugleich werden Stickoxide (NOx) selektiv unter Umsetzung der wässrigen Harnstofflösung zu Stickstoff (N₂) und Wasser (H₂O) umgewandelt.

Der gereinigte Abgasstrom gelangt nun in den Sperrkatalysator 24. Der Sperrkatalysator 24 entfernt Ammoniak (NH₃) aus dem Abgasstrom, der sich in Folge einer Überdosierung von wässriger Harnstofflösung gebildet haben könnte und wirkt somit dem Ammoniak-Schlupf entgegen. Dann tritt der Abgasstrom aus der Abgasnachbehandlungsvorrichtung 10 aus in Richtung Auspuff des Kraftfahrzeugs.

Es wird nun auf Fig. 3 Bezug genommen.

Die Fig. 3 zeigt ein weiteres Ausführungsbeispiel einer Abgasnachbehandlungsvorrichtung 10 zur Nachbehandlung von Abgasen einer Brennkraftmaschine 32, die sich von der Abgasnachbehandlungsvorrichtung 10 gemäß der Fig. 2 dadurch unterscheidet, dass der zweite Abschnitt 18 des Katalysators 12 eine SCR-Beschichtung aufweist, keine Mischvorrichtung 36 vorgesehen ist, und anstelle des SCRF-Katalysator 38 und des Sperrkatalysators 24 ein Dieselrußpartikelfilter 26 vorgesehen ist.

Somit unterschiedet sich der Betrieb der Abgasnachbehandlungsvorrichtung 10 gemäß der Fig. 3 von dem Ausführungsbeispiel gemäß der Fig. 2 dadurch, dass bereits im zweiten Abschnitt 18 des Katalysators 12 durch die SCR-Beschichtung Stickoxide (NOx) selektiv unter Umsetzung der wässrigen Harnstofflösung zu Stickstoff (N₂) und Wasser (H₂O) umgewandelt werden.

Der anschließend in den Dieselrußpartikelfilter 26 eintretende Abgasstrom wird durch den Dieselrußpartikelfilter 26 von Rußpartikeln im Abgasstrom befreit. Dann tritt der Abgasstrom aus der Abgasnachbehandlungsvorrichtung 10 aus in Richtung Auspuff des Kraftfahrzeugs.

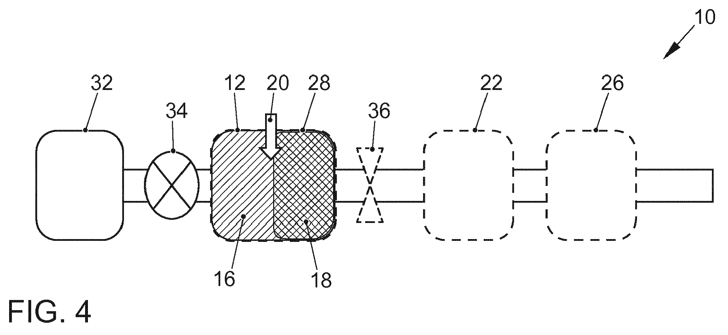

Es wird nun auf Fig. 4 Bezug genommen.

Die Fig. 4 zeigt ein weiteres Ausführungsbeispiel einer Abgasnachbehandlungsvorrichtung 10 zur Nachbehandlung von Abgasen einer Brennkraftmaschine 32, die sich von der Abgasnachbehandlungsvorrichtung 10 gemäß der Fig. 2 dadurch unterscheidet, dass anstellte des Sperrkatalysators 24 ein Dieselrußpartikelfilter 26 vorgesehen ist.

Somit unterscheidet sich der Betrieb der Abgasnachbehandlungsvorrichtung 10 gemäß der Fig. 4 von dem Ausführungsbeispiel gemäß der Fig. 2 dadurch, dass der anschließend in den Dieselrußpartikelfilter 26 eintretende Abgasstrom durch den Dieselrußpartikelfilter 26 von Rußpartikeln im Abgasstrom befreit wird. Dann tritt der Abgasstrom aus der Abgasnachbehandlungsvorrichtung 10 aus in Richtung Auspuff (nicht dargestellt) des Kraftfahrzeugs.

### BEZUGSZEICHENLISTE

- 10: Abgasnachbehandlungsvorrichtung
- 12: Katalysator
- 14: Einspritzvorrichtung
- 16: erster Abschnitt
- 18: zweiter Abschnitt
- 20: Einspritzdüse
- 22: SCR-Katalysator
- 24: Sperrkatalysator
- 26: Dieselrußpartikelfilter
- 28: Wabenkörper
- 30: Sensor
- 32: Brennkraftmaschine
- 34: Abgasturbolader
- 36: Mischvorrichtung
- 38: SCRF-Katalysator
- 40: Gehäuse
- 42: Einsetzöffnung

- A: Strömungsrichtung

## Patentansprüche

1. Katalysator (12) zur Abgasnachbehandlung, **dadurch gekennzeichnet, dass** eine Einspritzdüse (20) einer Einspritzvorrichtung (14) zum Einspritzen von einem Reduktionsmittel in einen Wabenkörper (28) des Katalysators (12) mündend vorgesehen ist.

2. Katalysator (12) nach Anspruch 1, **dadurch gekennzeichnet, dass** der Wabenkörper (28) in Einbaulage in Strömungsrichtung (A) des Abgasstromes einen ersten Abschnitt (16) und einen sich in Strömungsrichtung (A) des Abgasstromes an den ersten Abschnitt anschließenden zweiten Abschnitt (18) aufweist, wobei die Einspritzdüse (12) der Einspritzvorrichtung (6) in den zweiten Abschnitt (18) mündend angeordnet ist.

3. Katalysator (12) nach Anspruch 1 oder 2, **dadurch gekennzeichnet, dass** der Katalysator (12) als Dieseloxidationskatalysator ausgebildet ist

4. Katalysator (12) nach Anspruch 1, 2 oder 3, **dadurch gekennzeichnet, dass** der Katalysator (12) als NOx-Speicherkatalysator ausgebildet ist

5. Katalysator (12) nach einem der vorstehenden Ansprüche, **dadurch gekennzeichnet, dass** der zweite Abschnitt (18) eine Hydrolyse-Beschichtung aufweist.

6. Katalysator (12) nach einem der Ansprüche 1 bis 4, **dadurch gekennzeichnet, dass** der zweite Abschnitt (18) eine SCR-Beschichtung aufweist.

7. Katalysator (12) nach einem der Ansprüche 1 bis 4, **dadurch gekennzeichnet, dass** der zweite Abschnitt (10) unbeschichtet ist.

8. Abgasnachbehandlungsvorrichtung (10) zur Abgasnachbehandlung, mit zumindest einem Katalysator (12) nach einem der vorstehenden Ansprüche.

9. Abgasnachbehandlungsvorrichtung (10) nach Anspruch 8, **dadurch gekennzeichnet, dass** in Strömungsrichtung (A) des Abgasstromes hinter dem zweiten Abschnitt (18) ein SCR-Katalysator (22) und/oder ein Sperrkatalysator (24) und/oder ein Dieselrußpartikelfilter (26) und/oder ein SCRF-Katalysator (38) angeordnet ist.

10. Kraftfahrzeug mit einer Abgasnachbehandlungsvorrichtung (10) nach Anspruch 8 oder 9.
